# EUROPEAN PATENT SPECIFICATION

(11) **EP 0 799 837 B1**
(45) Date of publication and mention of the grant of the patent: **18.08.2004**
(21) Application number: 97200969.0
(22) Date of filing: 02.04.1997
(51) Int. Cl.: C08B 35/00

(54) **Aqueous compositions comprising amylopectin-potatostarch and process for their manufacture**
Wässrige Zusammensetzungen, die Amylopektin-Kartoffelstärke enthalten und Verfahren zur Herstellung
Compositions aqueuses comprenant de l'amylopectine à partir d'amidon de pommes de terre et procédé de fabrication

(30) Priority: 03.04.1996 NL 1002782
(43) Date of publication of application: 08.10.1997
(73) Proprietor: Coöperatieve Verkoop- en Productievereniging van Aardappelmeel en Derivaten 'AVEBE' B.A., NL-9641 JA Veendam (NL)
(72) Inventor: Huizenga, Reinald Henk, 9727 CH Groningen (NL); Alrich, Herman Gerrit, 9472 WN Zuidlaren (NL); de Groot, Ingrid Linda, 8016 CZ Zwolle (NL)
(74) Representative: Smulders, Theodorus A.H.J., Ir.

(56) References cited:
- WO-A-92/11376
- FR-A- 2 674 729
- A.-C. ELIASSON: "Retrogradation of starch as measured by differential scanning calorimetry." NEW APPROACHES TO RESEARCH ON CEREAL CARBOHYDRATES, 1985, AMSTERDAM, pages 93-98, XP002063171
- LILIAN V. BATRES ET AL.: "Interaction of Amylopectin and Monoglycerides in Model Systems" JOURNAL OF THE AMERICAN OIL CHEMISTS' SOCIETY, vol. 63, no. 12, 1 December 1986, CHAMPAIGN US, pages 1537-1540, XP002019810
- R. HOOVER ET AL.: "Characterization of Potato Starch and its Monoglyceride Complexes" STARKE, vol. 33, no. 9, 1981, WEINHEIM DE, pages 290-300, XP002019811
- J.A. DE VRIES: "Nieuwe mogelijkheden met amylopectine-aardappelzetmeel." VOEDINGSMIDDELENTECHNOLOGIE, vol. 28, no. 23, 1995, pages 26-27, XP002063172

## Description

The invention relates to aqueous compositions, such as gels and viscous liquids, which are characterized by the presence of an interaction product of a molecularly dispersed amylopectin-potato starch and emulsifiers.

In numerous industries aqueous compositions are manufactured and/or used. Products having a gel structure are important, inter alia, in the preparation of specific food products, pharmaceutics, detergents, cosmetics and animal feeds. These products usually consist of water, the gel structure being obtained by using suitable gelling agents, such as gelatin, agar, pectins, starch products, carragenates, alginates and xanthan gum. Frequent use is also made of mixtures of these gelling agents.

Starch products, cellulose derivatives and different natural gums are used as thickeners in liquids. It is then often desirable to use thickeners which, even when using only a small amount thereof, give these liquids a relatively high viscosity. Such liquids having an increased viscosity are important, inter alia, in the manufacture of specific food products, animal feeds, adhesives and drilling muds.

The invention relates to aqueous compositions in which a new type of potato starch, namely amylopectin-potato starch, is inclused as a gelling agent or thickener. Hereinafter follows a brief explanation of amylopectin-potato starch.

Most of the starch types consist of granules in which two types of glucose polymers occur, namely amylose (15 to 35 wt.% on dry substance) and amylopectin (65 to 85 wt.% on dry substance). Amylose consists of unbranched or slightly branched molecules having an average degree of polymerization of 1000 to 5000 (depending on the starch type). Amylopectin consists of very large, highly branched molecules having an average degree of polymerization of 2,000,000. The commercially most important starch types, namely maize starch, potato starch, wheat starch and tapioca starch, contain 15 to 30 wt.% amylose.

Of some cereal types, namely barley, maize, millet, milo, rice and sorghum, there are natural varieties of which the starch granules nearly completely consist of amylopectin. Calculated as weight percent on dry substance, these starch granules contain more than 95% and usually more than 98% amylopectin. The amylose content of these cereal starch granules is therefore less than 5% and usually less than 2%. It has been found that, in the forming of amylopectin-cereal starch granules in the cereal plant, the enzyme catalyzing the synthesis of amylose molecules is absent. The above cereal varieties are also referred to as waxy cereal grains and the amylopectin-starch granules isolated therefrom as waxy cereal starches.

In contrast to the situation with different cereals, potato varieties of which the starch granules nearly exclusively consist of amylopectin are not known from nature. The potato starch granules isolated from potato tubers usually contain about 20% amylose and 80% amylopectin (wt.% on dry substance). During the past 10 years, however, successful efforts have been made to cultivate by genetic modification potato plants which, in the potato tubers, form starch granules consisting more than 95 wt.% (on dry substance) of amylopectin.

In the forming of starch granules in the plant, different enzymes are catalytically active. Of these enzymes, the granule-bound starch synthase (GBSS) is involved in the forming of amylose. The synthesis of the GBSS enzyme depends on the activity of genes coding for the GBSS enzyme. Elimination or inhibition of the expression of these specific genes results in the synthesis of the GBSS enzyme being prevented or limited. The elimination of these genes can be realized by genetic modification of potato plant material. An example thereof is the amylose-free mutant of the potato (amf) of which the starch substantially only contains amylopectin through a recessive mutation in the GBSS gene. This mutation technique is described, inter alia, in the following two magazine articles:
- J.H.M. Hovenkamp-Hermelink et al.
   Isolation of amylose-free starch mutant of the potato (Solanum tuberosum L.)
   Theor. Appl. Genet. (1987), 75: 217-221.
- E. Jacobsen et al.
   Introduction of an amylose-free (amf) mutant into breeding of cultivated potato, Solanum tuberosum
   L. Euphytica (1991), 53, 247-253.

Elimination or inhibition of the expression of the GBSS gene in the potato is also possible by using so-called antisense inhibition. This genetic modification of the potato is described in Canadian patent 2,061,443; International patent WO 92/11376; and in the following magazine article:
- R.G.F. Visser et al.
   Inhibition of the expression of the gene for granule-bound starch synthase in potato by antisense constructs.
   Mol. Gen. Genet. (1991), 225: 289-296.

By using genetic modification, it has been found possible to cultivate and breed potatoes of which the starch granules contain little or practically no amylose. As referred to herein, amylopectin-potato starch is the potato starch granules isolated from potato tubers and having an amylopectin content of least 95 wt.%, based on the dry substance.

Regarding production possibilities and properties, there are significant differences between amylopectin-potato starch, on the one hand, and the waxy cereal starches, on the other hand. This particularly also applies to waxy maize starch, which is commercially by far the most important waxy cereal starch. The cultivation of waxy maize, suitable for the production of waxy maize starch, is not commercially feasible in countries having a cold or temperate climate, such as the Netherlands, Belgium, England, Germany, Poland, Sweden and Denmark. On the other hand, the climate in these countries is suitable for the cultivation of potatoes.

The composition and properties of amylopectin-potato starch differ from those of the waxy cereal starches. Thus, , amylopectin-potato starch has a much lower content of lipids and proteins than the waxy cereal starches. Problems regarding odour and frothing, which, because of the lipids and/or proteins, may occur when using waxy cereal starch products (native and modified), do not occur or occur in a much lesser degree when using corresponding amylopectin-potato starch products. In contrast to the waxy cereal starches, amylopectin-potato starch contains chemically bound phosphate groups. As a result, amylopectin-potato starch products in the dissolved state have a specific polyelectrolyte character.

U.S. patent 5,291,877 relates to an aqueous gel composition, in which a physicochemical interaction product of a gelatinized amylose-containing starch and an emulsifier is present as a gelling agent. The physicochemical interaction takes place by complex forming between the amylose molecules and the emulsifier molecules. Suitable starch types contain 15 to 30 wt.% amylose, such as potato starch (with 15 to 30 wt.% amylose), tapioca starch, maize starch and/or wheat starch. It is observed that starch which nearly completely consists of amylopectin, such as waxy maize starch, is not suitable (column 3, lines 34-38). Very suitable emulsifiers are glycerol monostearate, calcium stearoyl lactylate, sodium stearoyl lactylate, polyoxyethylene sorbitan monostearate and/or polyethylene glycol monolaurate (column 3, lines 50-54).

French patent 2,674,729 relates to a thickener for aqueous liquid food products consisting of a combination of a starch and sugar glyceride. Sugar glycerides are emulsifiers, also referred to as sucroglycerides. The viscosity of aqueous solutions of the starch used is substantially increased in the presence of the sucroglycerides. In this connection reference is made to synergism (page 1, lines 26-29). Thus, according to the above patent less starch is required to obtain a specific viscosity (page 1, lines 30-34). As a starch type, maize starch or wheat starch is preferably used (page 3, lines 12-14). It is also possible, however, to use potato starch or tapioca starch (claim 7). The above starch types contain 15 to 30 wt.% amylose (see also page 1, lines 7-8).
According to Example 3, no viscosity increase is determined when using sucroglycerides in potato starch solutions.

From JAOCS, 63, No. 12 (1986), pages 1537-1540, it is known to form from amylopectin and monoglycerides insoluble complexes which can be processed into bread dough to prevent the ageing of bread.

From the literature it is not known to use amylopectin-potato starch products in combination with emulsifiers for preparing aqueous compositions, such as gels and viscous liquids. In view of the above literature, it was not obvious at all to modify amylopectin-potato starch which contains practically no amylose by interaction with emulsifiers. According to U.S. patent 5,291,877, it is precisely the amylose fraction which, by complexing, comes to interaction with emulsifiers. According to French patent 2,674,729, only amylose-containing starches are used.

Surprisingly, it has now been found that amylopectin-potato starch in molecularly dispersed form in water can interact with emulsifiers. The interaction product can give aqueous liquids a gel character or a highly viscous character.

It is an object of the invention to provide an aqueous composition, which, by the presence of an interaction product of molecularly dispersed amylopectin-potato starch and an emulsifier, has the character of a gel or a viscous liquid. The interaction taking place is, presumably, of a physiochemischal nature and leads to the forming of watersoluble complexes.

According to the invention, amylopectin-potato starch is used as a starch component. This starch can be unmodified (native) or modified. The modified amylopectin-potato starch can be obtained by physical, enzymatic and/or chemical modification of native amylopectin-potato starch, in a manner such that in a molecularly dispersed form in water it can interact with the emulsifiers used. Examples of these modified amylopectin-potato starch products are pregelatinized amylopectin-potato starch and decomposed (converted) amylopectin-potato starch products obtained by partial depolymerization of amylopectin-potato starch under the influence of acids, oxydants and/or enzymes. The aqueous composition according to the invention preferably contains 1 to 40 wt.% amylopectin-potato starch and most preferably 2 to 20 wt.%.

The emulsifier used according to the invention must be capable of interacting with amylopectin-potato starch molecules dissolved in water. Examples of suitable emulsifiers are salts of fatty acids; monoglycerides of fatty acids; monoglycerides of fatty acids still esterified with acetic acid, lactic acid, citric acid and/or tartaric acid; sugar glycerides; sugar esters of fatty acids; polyglycerol esters with fatty acids; esters of propylene glycol with fatty acids; calcium stearoyl lactylate; sodium stearoyl lactylaat; stearoyl tartrate; sorbitan monoglycerides and polysorbates.

The emulsifier is used in a form such that the emulsifier molecules are present in the aqueous medium used in molecularly dispersed form, thus enabling them to interact with the dissolved amylopectin-potato starch molecules. For this purpose, the emulsifier can be previously dispersed in a minor amount of water and/or ethanol, after which the resulting dispersion is added to the air-dry starch component or to the starch-water mixture. The temperature and pH at which the emulsifier dispersion is made depends on the type of emulsifier.

The emulsifier may be added to the starch-water mixture before, during or after the gelatinization of the starch. If desired, the emulsifier may also be added to the air-dry starch product, after which the resulting mixture is gelatinized in water. The amount of emulsifier used depends on the type of emulsifier, the starch concentration, the desired effect (degree of viscosity increase or gelling), the degree of molecular dispersion of the starch, the method and degree of heating and cooling and the nature and amounts of the other components of the aqueous composition. The amount of emulsifier used according to the invention preferably ranges between 0.1 and 15 wt.% and most preferably between 0.2 and 10 wt.%, based on the dry starch. In general, to obtain a gel requires more emulsifier than to obtain an aqueous liquid having an increased viscosity.

To cause the amylopectin-potato starch molecules to interact with the emulsifier, a sufficient molecular dispersion of these starch molecules in an aqueous medium is required. The molecular dispersion of the amylopectin-potato starch during and/or after the gelatinization is promoted by using a high gelatinization temperature, a longer heating time and/or the action of mechanical forces. A suitable method for the molecular dispersion of amylopectin-potato starch is to gelatinize the aqueous starch suspension in a so-called steam injection apparatus (jet cooker). In this method the starch suspension is gelatinized at temperatures of 100°C or more by means of steam and mechanical forces. In case of gelatinizing the starch suspension below 100°C, a longer heating time and/or an additional mechanical process (e.g. stirring) is required to realize a sufficient molecular dispersion of the starch.

The aqueous compositions obtained according to the invention may be used in different products, such as food products, cosmetics, pharmaceutics, detergents, animal feeds and adhesives. Examples of food products having a gel structure are puddings, custard, sterilized food products, jellies, pastry fillings, desserts, tinned meat, sweets, salads, sauces, ice cream, spreads and different low-calorie food products. Food products in the form of viscous liquids are specific sauces, creams, soups and low-calorie food products. The aqueous compositions according to the invention can be used to replace fats and/or oils in different food products.

Besides water, amylopectin-potato starch and emulsifier, the aqueous compositions according to the invention may also contain the other ingredients and additives conventional for the use in question, such as sugars, proteins, gelling agents, thickeners, stabilizers, colourings and flavourings.

The invention will be explained by means the following examples. In these examples all parts and percentages are in weight, unless otherwise stated. The following products and procedures were used in the examples.

### Emulsifiers

Use was made of the following commercial products:
- Monoglyceride:: Myvatex Mighty Soft
(of Eastman Chemical Company; minimum 85% monoglyceride)

Myvatex Mighty Soft was added as a hot solution of 1 part of Myvatex Mighty Soft in 16 parts of ethanol. When the examples refer to MG, the monoglyceride Myvatex Mighty Soft is meant.
- Calcium stearoyl lactylate:: Basic CSL
(of Food Basics)
- Sodium stearoyl lactylate:: Basic SSL
(of Food Basics)

The % MG, CSL and SSL mentioned in the examples relate to weight percent commercial product (Myvatex Mighty Soft; Basic CSL; Basic SSL), based on the dry starch.

### Viscosity

The viscosity was determined by means of a Brookfield Helipath (HAT) at a rotational speed of 10 rpm. The measurement took place after 20 seconds.

### Gel strength

The gel strength was determined by means of a Stevens LFRA Texture Analyzer. The distance was 40 mm and the speed 20 mm/sec. Use was made of the cilindrical spindle TA 11 (diameter 2.5 cm; height 3.5 cm) and the normal cycle.

### Visual examination

In the visual examination of the aqueous compositions it was substantially examined whether it was possible to remove the composition from the beaker after 2 hours or 24 hours as a beaker form by turning the beaker upside down. It was examined whether the form was maintained or not. As referred to in the examples, the word "gelling" means that the gel can be entirely removed (released) from the beaker as a beaker form. In case of a strong gel, the released form is maintained for a longer period of time. In case of a weak gel, the released form comes to flow after a short time.

### Example 1

In this example the gelling behaviour of aqueous solutions of potato starch, PS, (with 20% amylose) and that of amylopectin-potato starch, APS, (with substantially no amylose) with and without monoglyceride (MG) are compared with each other.

The starch solutions were manufactured by means of a laboratory jet cooker, gelatinizing a suspension of starch in mains water by means of steam to form a starch solution in which the starch molecules are largely molecularly dispersed. The resulting starch solution had a starch concentration of 10%. To this starch solution 1% MG (based on dry starch) was added (as a hot solution in ethanol) with stirring. The starch solution was then poured into beakers of 250 ml. If necessary, foam and air bubbles were removed by means of an ultrasonic bath. Then the beakers were placed in a water bath of 20°C. After 2 or 4 hours and 24 hours the viscosity (HAT) and the gel strength (Stevens) were determined, and the starch solution was visually examined. The results are given in Table 1.

**Table 1**

| Brookfield (mPa.s) and Stevens values (g) of 10% solutions of potato starch (PS) and amylopectin-potato starch (APS) in mains water with and without addition of 1% MG. | | | | | |
|---|---|---|---|---|---|
| Storage time hours | Property | 10% PS | 10% PS + 1% MG | 10% APS | 10% APS + 1% MG |
| 2 | Brookfield | <4000 | 4000 | <4000 | 240,000 |
| 2 | Stevens | <40 | <40 | <40 | 305 |
| 24 | Brookfield | 7700 | 4000 | <4000 | 264,000 |
| 24 | Stevens | <40 | <40 | <40 | 284 |

When storing solutions of potato starch (with and without MG) and of amylopectin-potato starch (without MG), the solutions remained liquid and no gelling occurred.

When storing a solution of amylopectin-potato starch to which 1% MG was added, a gel was formed which could be released from the beaker as a form by turning the beaker upside down.

### Example 2

In this example the effect of the amount of monoglyceride (MG) on the rheological behaviour of 10% solutions of amylopectin-potato starch (APS) in mains water is examined. The starch solutions were manufactured as described in Example 1. The amount of MG was varied from 0%; 0.3%; 0.5%; 0.7% and 1% MG (based on dry starch). The results are given in Table 2.

**Table 2**

| The Brookfield (mPa.s) and Stevens values (g) of 10% solutions of amylopectin-potato starch (APS) in mains water when adding different amounts of MG (weight percent on dry starch). | | | | | | |
|---|---|---|---|---|---|---|
| Storage time hours | Property | 10% APS + added: | | | | |
| | | 0% MG | 0.3% MG | 0.5% MG | 0.7% MG | 1% MG |
| 4 | Brookfield | <4000 | 41,000 | 77,000 | 102,000 | 160,000 |
| 4 | Stevens | <40 | 113 | 167 | 228 | 202 |
| 24 | Brookfield | <4000 | 49,000 | 42,000 | 130,000 | 171,000 |
| 24 | Stevens | <40 | 153 | 178 | 236 | 173 |

Table 2 shows that the viscosity increases when the amount of added MG increases. The 10% solution of APS (without MG) is a liquid, pourable solution. The APS solution with 0.3% MG has an increased viscosity, but gives no gel retaining its form. The other APS solutions with 0.5%; 0.7% and 1% MG can be released from the beaker as a form. The gel form with 0,5% MG is the least firm (sags a little). The APS gels with 0.7% and with 1% MG are visually comparable in gel strength.

### Example 3

In this example calcium stearoyl lactylate (CSL) and sodium stearoyl lactylate (SSL) are used as emulsifiers. These emulsifiers were added in solid form to the 10% solution of amylopectin-potato starch (as prepared in Example 1). After this addition the solution was thoroughly mixed by means of a mixer. The results of the rheological measurements are given in Table 3.

**Table 3**

| The Brookfield (mPa.s) and Stevens values (g) of 10% solution of amylopectin-potato starch (APS) with added 1% CSL and 1% SSL (based on dry starch). | | | | |
|---|---|---|---|---|
| Storage time hours | Property | 10% APS without emulsifier | 10% APS + 1% CSL | 10% APS +1% SSL |
| 4 | Brookfield | <4000 | 13,000 | 40,000 |
| 4 | Stevens | <40 | 41 | 104 |
| 24 | Brookfield | <4000 | 26,000 | 41,000 |
| 24 | Stevens | <40 | 74 | 130 |

Table 3 shows that the presence of CSL and SSL gives APS solutions an increased viscosity. The APS composition with CSL can be removed from the beaker as a form, after which the form slowly flows. The APS composition with SSL can also be removed from the beaker as a form. The resulting gel is firmer and is less quick to flow.

### Example 4

This example shows that when using waxy maize starch (WMS) in combination with MG substantially less viscosity increase and gelling effect is obtained in comparison with the use of amylopectin-potato starch (APS) in combination with MG according to the invention (compare with Example 1). Waxy maize starch, like APS, nearly completely consists of amylopectin.

The solutions of waxy maize starch were prepared with the laboratory jet cooker as described in Example 1. However, the addition of MG took place before gelatinizing WMS in the jet cooker. In Table 4 are given the results of the rheological measurements at the starch solutions poured into the beakers (as described in Example 1).

**Table 4**

| The Brookfield (mPa.s) and Stevens values (g) of waxy maize starch solutions with and without addition of 1% MG (based on dry starch). | | | | | |
|---|---|---|---|---|---|
| Storage time hours | Property | 10.7% WMS | 10.5% WMS + 1% MG | 18.7% WMS | 19.1% WMS + 1% MG |
| 4 | Brookfield | <4000 | 10,000 | 8000 | 26,000 |
| 4 | Stevens | <40 | <40 | <40 | 104 |
| 24 | Brookfield | <4000 | 13,000 | 8000 | 60,000 |
| 24 | Stevens | <40 | <40 | <40 | 123 |

The use of WMS in combination with 1% MG gives no firm gel, not even at 19.1% WMS. According to Example 1 the combination APS with 1% MG gives a firm gel already at 10% APS. Furthermore, it is found that when 10.5% WMS is used in combination with 1% MG a much lower viscosity is obtained (10,000 mPa.s) in comparison with the combination 10% APS with 1% MG (240,000 mPa.s), even at a storage time of 4 hours for WMS and 2 hours for APS.

### Example 5

This example shows that when using oxidized amylopectin-potato starch and acid-modified amylopectin-potato starch in the presence of MG in aqueous solutions, viscosity increase and/or gelling occurs.

A starch suspension (1 liter) in which 100 g starch and 1 g MG were present was boiled up with open steam. After gelatinizing, boiling was continued for 20 minutes. Then the volume was replenished to 1 liter and the starch solution was stirred for 1 minute with a Kotthoffmischsirene (at 2800 rpm). Subsequently, there was cooled overnight to 20°C. Then the viscosity was measured with a Brookfield viscosimeter (type RVF, at 20 rpm). The results are given in Table 5.

**Table 5**

| The Brookfield (mPa.s) of 10% solution of boiled-up starch products with addition of 1% MG (based on dry starch). | |
|---|---|
| Starch product | Viscosity at 20°C Brookfield, RVF, 20 rpm |
| Potato starch (20% amylose) | 12,000 |
| Amylopectin-potato starch | 72,000 |
| Oxidized amylopectin-potato starch | gel |
| Acid-modified waxy maize starch | 228 |
| Acid-modified potato starch (20% amylose) | 5,500 |
| Acid-modified amylopectin-potato starch | 46,000 |

Table 5 shows that partially depolymerized amylopectin-potato starch products obtained by means of oxidation and acid hydrolysis, by interaction with MG, can give aqueous solutions the character of a gel or highly viscous liquid.

## Claims

1. An aqueous composition, **characterized by** the presence of an interaction product of a molecularly dispersed amylopectin-potato starch and an emulsifier.

2. An aqueous composition according to claim 1 in the form of a viscous liquid.

3. An aqueous composition according to claim 1 in the form of a gel.

4. An aqueous composition according to claims 1-3, **characterized in that** the emulsifier is a monoglyceride.

5. An aqueous composition according to claims 1-3, **characterized in that** the emulsifier is a stearoyl lactylate.

6. An aqueous composition according to claims 1-5, **characterized in that** 1 to 20 wt.% amylopectin-potato starch is present.

7. An aqueous composition according to claims 1-6, **characterized in that** 0,1 to 15 wt.% emulsifier (based on dry starch) is present.

8. An aqueous composition according to claims 1-7, **characterized in that** a partially depolymerized starch product is used as amylopectin-potato starch.

9. A process for preparing an aqueous composition according to claims 1-7, **characterized in that** amylopectin-potato starch is molecularly dispersed in an aqueous liquid, after which the emulsifier is added.

10. A process for preparing an aqueous composition according to claims 1-7, **characterized in that** amylopectin-potato starch is molecularly dispersed in an aqueous liquid in the presence of the emulsifier.

11. A process according to claim 9 or 10, **characterized in that** the emulsifier is used in an amount of 0.1 to 15 wt.%, based on the dry amylopectin-potato starch.

12. The use of an interaction product of a molecularly dispersed amylopectin-potato starch and an emulsifier as a means for increasing the viscosity of an aqueous composition or to give it a gel structure.

## Patentansprüche

1. Wässrige Zusammensetzung, **gekennzeichnet durch** die Anwesenheit eines Wechselwirkungsprodukts einer molekulardispergierten Amylopektin-Kartoffelstärke und eines Emulgators.

2. Wässrige Zusammensetzung gemäß Anspruch 1 in Form einer viskosen Flüssigkeit.

3. Wässrige Zusammensetzung gemäß Anspruch 1 in Form eines Gels.

4. Wässrige Zusammensetzung gemäß den Ansprüchen 1 bis 3, **dadurch gekennzeichnet, dass** der Emulgator ein Monoglycerid ist.

5. Wässrige Zusammensetzung gemäß den Ansprüchen 1 bis 3, **dadurch gekennzeichnet, dass** der Emulgator ein Stearoyllactylat ist.

6. Wässrige Zusammensetzung gemäß den Ansprüchen 1 bis 5, **dadurch gekennzeichnet, dass** 1 bis 20 Gew.-% Amylopektin-Kartoffelstärke vorhanden sind.

7. Wässrige Zusammensetzung gemäß den Ansprüchen- 1 bis 6, **dadurch gekennzeichnet, dass** 0,1 bis 15 Gew.-% Emulgator (bezogen auf die trockene Stärke) vorhanden sind.

8. Wässrige Zusammensetzung gemäß den Ansprüchen 1 bis 7, **dadurch gekennzeichnet, dass** ein partiell depolymerisiertes Stärkeprodukt als Amylopektin-Kartoffelstärke verwendet wird.

9. Verfahren zur Herstellung einer wässrigen Zusammensetzung gemäß den Ansprüchen 1 bis 7, **dadurch gekennzeichnet, dass** Amylopektin-Kartoffelstärke molekular in einer wässrigen Flüssigkeit dispergiert wird und danach der Emulgator hinzugefügt wird.

10. Verfahren zur Herstellung einer wässrigen Zusammensetzung gemäß den Ansprüchen 1 bis 7, **dadurch gekennzeichnet, dass** Amylopektin-Kartoffelstärke in Gegenwart des Emulgators molekular in einer wässrigen Flüssigkeit dispergiert wird.

11. Verfahren gemäß Anspruch 9 oder 10, **dadurch gekennzeichnet, dass** der Emulgator in einer Menge von 0,1 bis 15 Gew.-% verwendet wird, bezogen auf die trockene Amylopektin-Kartoffelstärke.

12. Verwendung eines Wechselwirkungsprodukts einer molekulardispergierten Amylopektin-Kartoffelstärke und eines Emulgators als Mittel zur Erhöhung der Viskosität einer wässrigen Zusammensetzung, oder um ihr eine Gelstruktur zu verleihen.

## Revendications

1. Composition aqueuse, **caractérisée par** la présence d'un produit d'interaction entre un amidon de pomme de terre contenant de l'amylopectine moléculairement dispersé et un émulsifiant.

2. Composition aqueuse selon la revendication 1 se présentant sous forme d'un liquide visqueux.

3. Composition aqueuse selon la revendication 1 se présentant sous forme d'un gel.

4. Composition aqueuse selon les revendications 1 à 3, **caractérisée en ce que** l'émulsifiant est un monoglycéride.

5. Composition aqueuse selon les revendications 1 à 3, **caractérisée en ce que** l'émulsifiant est un stéaroyl lactylate.

6. Composition aqueuse selon les revendications 1 à 5, **caractérisée en ce que** 1 à 20% en poids d'amidon de pomme de terre contenant de l'amylopectine est présent.

7. Composition aqueuse selon les revendications 1 à 6, **caractérisée en ce que** 0,1 à 15% en poids d'émulsifiant (par rapport à l'amidon sec) est présent.

8. Composition aqueuse selon les revendications 1 à 7, **caractérisée en ce qu'**un produit d'amidon partiellement dépolymérisé est utilisé en tant qu'amidon de pomme de terre contenant de l'amylopectine.

9. Procédé de préparation d'une composition aqueuse selon les revendications 1 à 7, **caractérisé en ce que** l'amidon de pomme de terre contenant de l'amylopectine est moléculairement dispersé dans un liquide aqueux, après quoi l'émulsifiant est ajouté.

10. Procédé de préparation d'une composition aqueuse selon les revendications 1 à 7, **caractérisé en ce que** l'amidon de pomme de terre contenant de l'amylopectine est moléculairement dispersé dans un liquide aqueux en présence de l'émulsifiant.

11. Procédé selon la revendication 9 ou la revendication 10, **caractérisé en ce que** l'émulsifiant est utilisé en une quantité de 0,1 à 15% en poids, par rapport à l'amidon de pomme de terre contenant de l'amylopectine sec.

12. Utilisation d'un produit d'interaction entre un amidon de pomme de terre contenant de l'amylopectine moléculairement dispersé et un émulsifiant dans le but d'augmenter la viscosité d'une composition aqueuse ou de lui donner une structure gélifiée.
